# EUROPÄISCHE PATENTANMELDUNG

(11) **EP 4 279 422 A1**
(43) Veröffentlichungstag der Anmeldung: **22.11.2023**
(21) Anmeldenummer: 22174576.3
(22) Anmeldetag: 20.05.2022
(51) Int. Cl.: B65G 21/20, B65G 47/71

(54) **SPEICHERTISCH EINER VERPACKUNGSANLAGE SOWIE VORRICHTUNG ZUM EIN- ODER AUSSCHLEUSEN VON VERPACKUNGEN IN EINE ODER AUS EINER SPEICHERLINIE EINES SPEICHERTISCHES**

(71) Anmelder: Illinois Tool Works, Inc., Glenview, Illinois 60025 (US)
(72) Erfinder: KORTE, Hartmut, 49584 Fürstenau (DE); BREECK, Sebastian, 49586 Neuenkirchen (DE)
(74) Vertreter: Meissner Bolte Partnerschaft mbB

(57) **Zusammenfassung**

Die Erfindung betrifft einen Speichertisch einer Verpackungsanlage, wobei der Speichertisch eine Einschleusung, eine Ausschleusung und mindestens zwei separat voneinander bestückbare, zwischen der Einschleusung und der Ausschleusung angeordnete Speicherlinien aufweist. Erfindungsgemäß ist insbesondere vorgesehen, dass die Einschleusung ein Bestückungsmittel (1) mit einem Förderkanal (2) aufweist, wobei das Bestückungsmittel (1) mit dem Förderkanal (2) ausgebildet ist, Verpackungen von einer stromaufwärts des Speichertisches angeordneten Fördereinrichtung aufzunehmen und diese so weiter zu fördern und dabei insbesondere so umzulenken, dass die Verpackungen in einer der mindestens zwei Speicherlinien aufgenommen werden können. Das Bestückungsmittel (1) ist derart insbesondere bedarfsweise adaptierbar ausgebildet ist, dass zumindest bereichs- oder abschnittsweise eine Breite und/oder Höhe des Förderkanals (2) verstellbar ist.

## Beschreibung

Die vorliegende Erfindung betrifft allgemein Verpackungslinien einer Verpackungsanlage und insbesondere Speichertische einer Verpackungsanlage.

Verpackungsanlagen zeichnen sich durch eine Vielzahl von Verpackungsstationen (Verpackungseinrichtungen) aus, welche die Verpackungen in jeweils unterschiedlichen Arbeitsschritten weiterverarbeiten. So sind beispielsweise bei Abfüllanlagen im Anschluss an eine Füllmaschine in der Regel zunächst ein Strohhalm-Applikator und anschließend ein Schrumpffolien-Applikator im Einsatz. In dem Schrumpffolien-Applikator werden mehrere Verpackungen zu einem Gebinde zusammengefasst. Diese genannten Verpackungsstationen sind rein beispielhaft und es sind selbstverständlich auch andere Konfigurationen denkbar.

Im Rahmen der üblichen Entwicklung einer Verpackungsanlage steht stets die Verarbeitungsrate (das heißt die Anzahl an Verpackungen pro Zeiteinheit) im Vordergrund. Je höher die Verpackungsrate, desto effizienter ist die Anlage. Von daher ist es stets das Ziel, die Verarbeitungsrate jeder einzelnen Einrichtung und somit der gesamten Verpackungsanlage zu erhöhen. Bei Betreiben einer Verpackungsanlage ist es Ziel, die jeweils langsamste Verpackungseinrichtung möglichst mit ihrer maximalen Verarbeitungsrate zu betreiben, so dass der Durchsatz an Verpackungen einer Verpackungsanlage möglichst maximiert ist.

Andererseits ist es im Betrieb einer Verpackungsanlage nicht vermeidbar, dass es im Rahmen der Verarbeitung der Verpackungen an einzelnen Verpackungseinrichtungen auch zu Störungen kommen kann. Um einen möglichst störungsfreien Produktionsablauf aufrechterhalten zu können und/oder um Schwankungen in der Verarbeitungsrate von Verpackungseinrichtungen der Verpackungsanlage zu kompensieren, ist es allgemein üblich, dass zwischen zwei Verpackungseinrichtungen eine Speichervorrichtung insbesondere in Gestalt eines Speichertisches angeordnet wird.

Der Speichertisch nimmt Verpackungen auf, wenn stromabwärts des Speichertisches in der Verpackungsanlage eine Störung auftritt und die Verpackungen nicht mehr weiter stromabwärts verarbeitet werden können. Sobald die stromabwärtige Störung behoben ist, können die auf dem Speichertisch zwischengespeicherten Verpackungen von dem Speichertisch abgerufen und weiterverarbeitet werden.

Demnach ist es durch den Speichertisch möglich, die im Hinblick auf den Speichertisch stromaufwärtigen Verpackungseinrichtungen oder andere Einrichtungen für eine gewisse Zeitperiode weiter zu betreiben, zumindest so lange, bis der Speichertisch gefüllt ist, das heißt die Aufnahmekapazität des Speichertisches ausgeschöpft ist.

Demnach erfüllt die Verwendung eines Speichertisches die Ausfallsicherheit einer stromaufwärtigen Einrichtung bei einem Ausfall einer stromabwärtigen Einrichtung, da die stromaufwärtige Einrichtung stets noch zunächst den Speichertisch mit Verpackungen füllen kann, ehe auch sie abgeschaltet werden muss. Ist die Störung der stromabwärtigen Einrichtung vorher behoben, kann die stromaufwärtige Einrichtung ohne Unterbrechung ihren Betrieb fortsetzen.

Ein Speichertisch der hierin berücksichtigten Art wird beispielsweise in der EP 3 854 732 A1 beschrieben.

Der aus diesem Stand der Technik bekannte Speichertisch weist eine Einschleusung, eine Ausschleusung und eine Vielzahl separat voneinander bestückbare und zwischen der Einschleusung und der Ausschleusung angeordnete Speicherlinien auf. Die Einschleusung sowie die Ausschleusung des aus der EP 3 854 732 A1 bekannten Speichertisches sind jeweils als ein linearbetriebener Satellit ausgeführt, welcher senkrecht zu den Speicherlinien bewegbar ist.

Da ein Speichertisch stets ein Kostenfaktor für eine Verpackungsanlage ist, besteht ein Bedarf nach einem möglichst flexibel einsetzbaren Speichertisch. Insbesondere liegt somit der Erfindung die Aufgabe zu Grunde, einen Speichertisch anzugeben, welcher grundsätzlich geeignet ist, unterschiedliche Verpackungen zwischenzuspeichern. Die Verpackungen unterscheiden sich insbesondere in ihrer Größe.

Diese Aufgabe wird insbesondere durch den Gegenstand des unabhängigen Patentanspruchs 1 gelöst, wobei vorteilhafte Weiterbildungen des erfindungsgemäßen Speichertisches in den abhängigen Ansprüchen angegeben sind.

Demgemäß betrifft die Erfindung insbesondere einen Speichertisch einer Verpackungsanlage, wobei der Speichertisch mindestens eine Einschleusung, mindestens eine Ausschleusung und mindestens zwei separat voneinander bestückbare und zwischen der mindestens einen Einschleusung und der mindestens einen Ausschleusung angeordnete Speicherlinien aufweist.

Damit der Speichertisch möglichst flexibel auch für unterschiedliche Verpackungsgrößen und/oder Verpackungsarten insbesondere auch für Verpackungen mit unterschiedlichen Komplementierungsgraden einsetzbar ist, ist erfindungsgemäß insbesondere vorgesehen, dass die mindestens eine Einschleusung ein Bestückungsmittel mit einem Förderkanal aufweist, wobei das Bestückungsmittel mit dem Förderkanal ausgebildet ist, Verpackungen von einer stromaufwärts des Speichertisches angeordneten Fördereinrichtung aufzunehmen und diese so weiter zu fördern und dabei insbesondere so umzulenken, dass die Verpackungen in einer der mindestens zwei Speicherlinien aufgenommen werden können.

Erfindungsgemäß ist dabei vorgesehen, dass das Bestückungsmittel derart insbesondere bedarfsweise adaptierbar ausgebildet ist, dass zumindest bereichs- oder abschnittsweise eine Breite und/oder Höhe des Förderkanals verstellbar ist.

Indem das Bestückungsmittel adaptierbar ausgeführt ist, ist der Speichertisch in der Lage, unterschiedliche Verpackungen, Verpackungen mit einem unterschiedlichen Komplementierungsgrad oder Verpackungen unterschiedlicher Größe und/oder Formgebung aufzunehmen. Insgesamt ist der Speichertisch somit besonders flexibel einsetzbar und bei einer Designänderung der zu bearbeitenden/der zu verarbeitenden Verpackungen anpassbar.

Gemäß Realisierungen des erfindungsgemäßen Speichertisches ist vorgesehen, dass das Bestückungsmittel der mindestens einen Einschleusung als ein linearbetriebener Satellit ausgeführt ist, welcher quer und vorzugsweise senkrecht zu den mindestens zwei Speicherlinien bewegbar ist.

Insbesondere ist es in diesem Zusammenhang denkbar, dass das Bestückungsmittel der mindestens einen Einschleusung als ein linearbetriebener Umlenker ausgeführt ist, welcher quer und vorzugsweise senkrecht zu den mindestens zwei Speicherlinien bewegbar und ausgebildet ist, ausgehend von der stromaufwärts des Speichertisches angeordneten Fördereinrichtung die Verpackungen entlang ihrer Förder- oder Transportrichtung so umzulenken, dass diese zu einer bestimmten, vorab festgelegten oder festlegbaren Speicherlinie der mindestens zwei Speicherlinien des Speichertisches bewegt werden.

Zur Adaption des Bestückungsmittels kommen unterschiedliche Lösungen in Frage.

Gemäß einer bevorzugten Realisierung ist vorgesehen, dass der Förderkanal der mindestens einen Einschleusung zwei einander gegenüberliegend angeordnete und eine Förder- oder Transportrichtung definierende Seitenbereiche aufweist, wobei mindestens einer der beiden einander gegenüberliegend angeordneten Seitenbereiche segmentiert ausgebildet ist und eine Vielzahl von aneinander angrenzenden Führungsabschnitten aufweist. Mindestens einer der Führungsabschnitte und vorzugsweise alle Führungsabschnitte sind bedarfsweise senkrecht zu der von dem Förderkanal vorgegebenen Förder- oder Transportrichtung bewegbar und/oder verstellbar, um zumindest bereichs- oder abschnittsweise die Breite des Förderkanals zu verstellen.

Gemäß einer Weiterbildung der zuletzt genannten Ausführungsform ist vorgesehen, dass den Führungsabschnitten mindestens ein Antrieb zugeordnet ist, welcher insbesondere als manuell betätigbarer oder als elektromotorisch betätigbarer Antrieb ausgeführt ist, und welcher ausgebildet ist, bedarfsweise den mindestens einen dem Antrieb zugeordneten Führungsabschnitt senkrecht zu der von dem Förderkanal vorgegebenen Förder- oder Transportrichtung zu bewegen bzw. zu verstellen.

Hierbei bietet es sich an, dass der Antrieb eine insbesondere mechanisch ausgebildete Synchronisationseinrichtung aufweist, welche ausgebildet ist, eine von dem Antrieb bewirkte Bewegung und/oder Verstellung von einem der Vielzahl von Führungsabschnitten vorzugsweise derart auf die anderen der Vielzahl von Führungsabschnitten zu übertragen, dass auch diese mit dem einem Führungsabschnitt bewegt und/oder verstellt werden.

Alternativ oder zusätzlich zu den zuvor beschriebenen Aspekten ist gemäß einem Aspekt der Erfindung vorgesehen, dass die mindestens eine Ausschleusung des Speichertisches ein Entnahmemittel mit einem Förderkanal aufweist, wobei das Entnahmemittel mit dem Förderkanal ausgebildet ist, in einer der mindestens zwei Speicherlinien aufgenommene Verpackungen aufzunehmen und diese so weiter zu fördern und dabei insbesondere so umzulenken, dass die Verpackungen von einer stromabwärts des Speichertisches angeordneten Fördereinrichtung aufgenommen werden können.

Wie auch bei der Einschleusung ist es bei der Ausschleusung denkbar, dass das Entnahmemittel derart insbesondere bedarfsweise adaptierbar ausgebildet ist, dass zumindest bereichs- oder abschnittsweise eine Breite und/oder Höhe des Förderkanals verstellbar ist.

Vorzugsweise ist das Entnahmemittel der mindestens einen Ausschleusung als ein linearbetriebener Satellit ausgeführt, welcher quer und vorzugsweise senkrecht zu den mindestens zwei Speicherlinien bewegbar ist.

Alternativ oder zusätzlich hierzu ist es aber auch denkbar, dass das Entnahmemittel der mindestens einen Ausschleusung als ein linearbetriebener Umlenker ausgeführt ist, welcher quer und vorzugsweise senkrecht zu den mindestens zwei Speicherlinien bewegbar und ausgebildet ist, ausgehend von einer Speicherlinie der mindestens zwei Speicherlinien die der Speicherlinie zugeordneten Verpackungen entlang ihrer Förder- oder Transportrichtung so umzulenken, dass diese zu der stromabwärts des Speichertisches angeordneten Fördereinrichtung bewegt werden.

Wie auch bei dem Förderkanal der mindestens einen Einschleusung ist gemäß bevorzugten Realisierungen des erfindungsgemäßen Speichertisches vorgesehen, dass der Förderkanal der mindestens einen Ausschleusung zwei einander gegenüberliegend angeordnete und eine Förder- oder Transportrichtung definierende Seitenbereiche aufweist, wobei mindestens einer der beiden einander gegenüberliegend angeordneten Seitenbereiche segmentiert ausgebildet ist und eine Vielzahl von aneinander angrenzenden Führungsabschnitte aufweist.

Mindestens einer der Führungsabschnitte und vorzugsweise alle Führungsabschnitte sind bedarfsweise senkrecht zu der von dem Förderkanal vorgegebenen Förder- oder Transportrichtung bewegbar und/oder verstellbar, um zumindest bereichs- oder abschnittsweise die Breite des Förderkanals verstellen zu können.

Grundsätzlich bietet es sich an, dass dem Förderkanal eine Fördereinrichtung mit mindestens einem vorzugsweise umlaufenden Förderband oder mit mindestens einer vorzugsweise umlaufenden Förderkette zugeordnet ist, wobei das Förderband bzw. die Förderkette zumindest im Wesentlichen vertikal ausgerichtet ist und über die Vielzahl von aneinander angrenzenden Führungsabschnitten geführt längs der mindestens einen der beiden einander gegenüberliegend angeordneten Seitenbereiche verläuft.

Die Erfindung betrifft ferner eine Vorrichtung zum Ein- oder Ausschleusen von Verpackungen in eine Speicherlinie oder aus einer Speicherlinie eines Speichertisches, insbesondere eines Speichertisches der zuvor genannten erfindungsgemäßen Art.

Vorzugsweise weist die Vorrichtung einen insbesondere linearbetriebenen Satelliten oder Umlenker auf, der quer und vorzugsweise senkrecht zu der Speicherlinie des Speichertisches bewegbar ist. Der Satellit bzw. der Umlenker weist einen Förderkanal auf, über den Verpackungen zu oder von der Speicherlinie förderbar sind. Insbesondere ist in diesem Zusammenhang vorgesehen, dass der Satellit bzw. Umlenker derart insbesondere bedarfsweise adaptierbar ausgebildet ist, dass zumindest bereichs- oder abschnittsweise eine Breite und/oder Höhe des Förderkanals verstellbar ist.

Bei der erfindungsgemäßen Vorrichtung zum Ein- bzw. Ausschleusen von Verpackungen in eine Speicherlinie oder aus einer Speicherlinie ist bevorzugt vorgesehen, dass der Förderkanal zwei einander gegenüberliegend angeordnete und eine Förder- oder Transportrichtung definierende Seitenbereiche aufweist, wobei mindestens einer der beiden einander gegenüberliegend angeordneten Seitenbereiche segmentiert ausgebildet ist und eine Vielzahl von aneinander angrenzenden Führungsabschnitten aufweist. Mindestens einer der Führungsabschnitte und vorzugsweise alle Führungsabschnitte sind bedarfsweise senkrecht zu der von dem Förderkanal vorgegebenen Förder- oder Transportrichtung bewegbar und/oder verstellbar, um zumindest bereichs- oder abschnittsweise die Breite des Förderkanals zu verstellen.

In bevorzugter Weise ist in diesem Zusammenhang vorgesehen, dass dem Förderkanal eine Fördereinrichtung mit mindestens einem vorzugsweise umlaufenden Förderband oder mit mindestens einer vorzugsweise umlaufenden Förderkette zugeordnet ist. Das Förderband bzw. die Förderkette ist zumindest im Wesentlichen vertikal ausgerichtet und wird über die Vielzahl von Führungsabschnitten längs der mindestens einen der beiden einander gegenüberliegend angeordneten Seitenbereiche geführt.

In diesem Zusammenhang bietet es sich an, dass dem Förderband bzw. der Förderkette ein insbesondere federbelastetes Spannelement zugeordnet ist, welches ausgebildet ist, bei einer Konturänderung des Förderkanals einen Umfangsausgleich des Förderbands bzw. der Förderkette zu kompensieren.

Gemäß Realisierungen der erfindungsgemäßen Vorrichtung ist vorgesehen, dass der Förderkanal derart gekrümmt ausgeführt ist, dass eine Förder- oder Transportrichtung der Verpackungen bei deren Bewegung durch den Förderkanal umgelenkt wird. Hierzu weist die Vorrichtung eine äußere konkave Förderseite und eine innere konvexe Förderseite auf, wobei zumindest bereichsweise zwischen der äußeren konkaven Förderseite und der inneren konvexen Förderseite der Förderkanal gebildet ist. Die äußere konkave Förderseite und/oder die innere konvexe Förderseite weist die Vielzahl von im Hinblick auf die Bewegungsrichtung der Verpackungen durch den Förderkanal radial verstellbare Führungsabschnitte auf.

Nachfolgend wird unter Bezugnahme auf die beiliegenden Zeichnungen eine exemplarische Ausführungsform der Erfindung näher beschrieben.

Es zeigen:

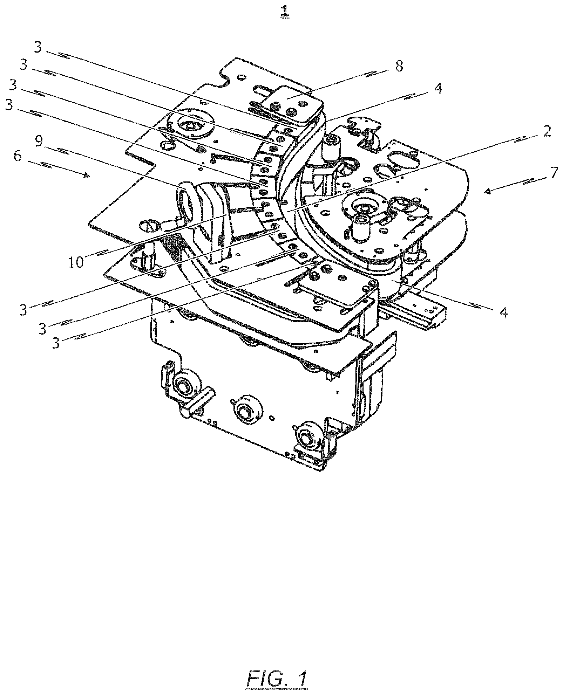

- FIG. 1: schematisch und in einer ersten isometrischen Ansicht eine exemplarische Ausführungsform der erfindungsgemäßen Vorrichtung zum Ein- oder Ausschleusen von Verpackungen in eine Speicherlinie oder aus einer Speicherlinie eines Speichertisches;

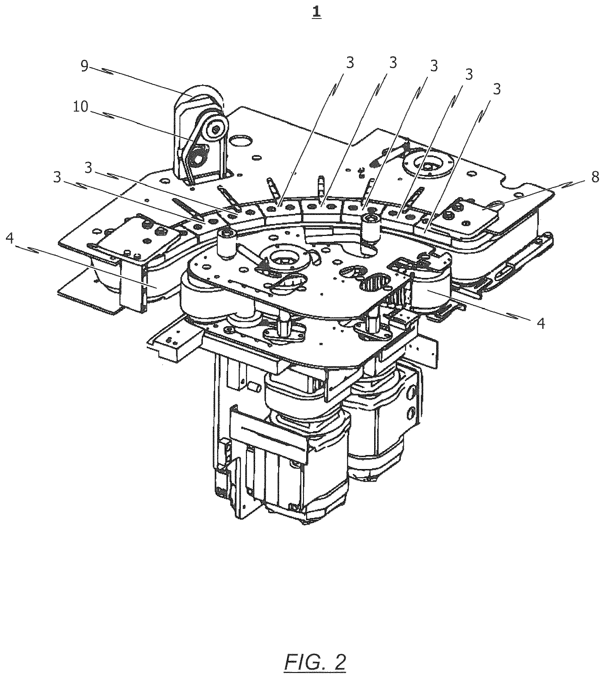

- FIG. 2: schematisch und in einer zweiten isometrischen Ansicht die exemplarische Ausführungsform der erfindungsgemäßen Vorrichtung gemäß FIG. 1;

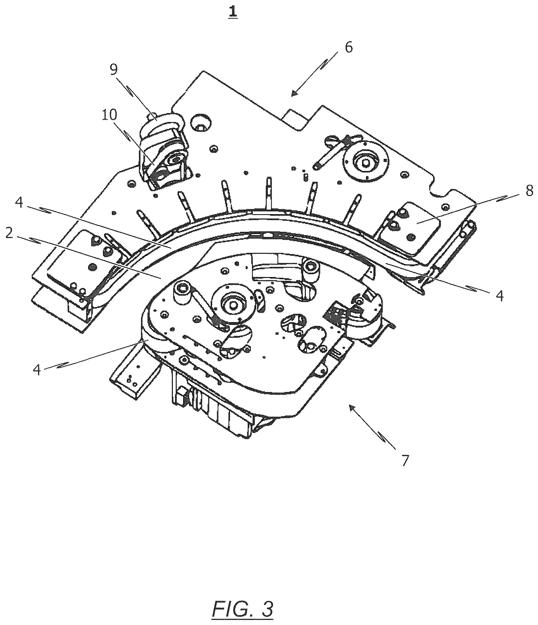

- FIG. 3: schematisch und in einer dritten isometrischen Ansicht die exemplarische Ausführungsform der erfindungsgemäßen Vorrichtung gemäß FIG. 1; und

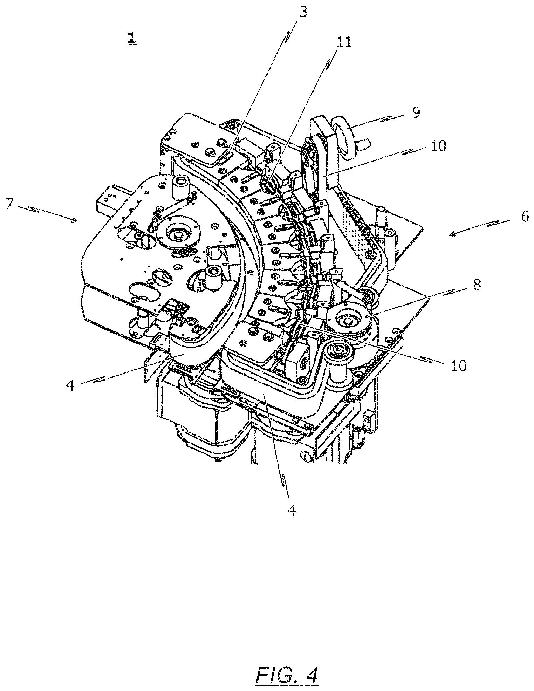

- FIG. 4: schematisch und in einer isometrischen Ansicht Einzelheiten der exemplarischen Ausführungsform der erfindungsgemäßen Vorrichtung gemäß FIG. 1.

Gegenstand der Erfindung ist - wie anhand einer exemplarischen Ausführungsform in den Zeichnungen gezeigt - eine Vorrichtung 1 zum Ein- oder Ausschleusen von Verpackungen in eine in den Zeichnungen nicht gezeigte Speicherlinie bzw. aus einer (in den Zeichnungen nicht gezeigten) Speicherlinie eines Speichertisches. Hierzu kommt ein gekrümmter Fördertunnel bzw. Förderkanal 2 zum Einsatz, welcher in der Breite an die zu fördernden Produkte anpassbar ist, ohne dass dafür formatbedingte Teile montiert oder demontiert werden müssen.

Wie es anschließend unter Bezugnahme auf die beiliegenden Zeichnungen näher beschrieben wird, ist dabei mindestens eine Außenseite des Förderkanals 2 und insbesondere die konkav geformte Außenseite des Förderkanals 2 radial verstellbar.

Die Verstellung ist über einen zentralen Einstellmechanismus bedienbar, wobei dieser Einstellmechanismus bei Bedarf auch motorisch angetrieben und gesteuert werden kann.

Die einzelnen Führungsabschnitte 3 oder Führungssegmente der äußeren Förderseite umgreifen formschlüssig das Förderelement, in diesem Fall ein Kunststoffkettenband 4 mit aufgesetzten Lamellen. Die Führungsabschnitte 3 sind so angeordnet, dass sie strahlenförmig zum Mittelpunkt des Kurvenradius jeweils linear verstellbar sind. Dadurch kann die äußere Förderkette 4 auf verschiedene Radien eingestellt werden.

Der Umfangsausgleich durch die Konturänderung der Förderkette 4 wird durch ein federbelastetes Spannelement 8 kompensiert.

Die Verstellrotation eines Handrads 9 oder einer Welle eines elektromotorischen Antriebs kann auf die einzelnen Führungsabschnitte 3 beispielsweise per Zahnriemen 10 übertragen werden.

Beispielsweise ist es in diesem Zusammenhang denkbar, dass jeder Führungsabschnitt 3 eine Doppelzahnscheibe 11 aufweist, wodurch mittels Zahnriemen 10 die Verstellrotation zum benachbarten Führungsabschnitt 3 übertragen wird. Durch eine darin integrierte Gewindespindel wird die Linearbewegung vom jeweiligen Führungsabschnitt 3 realisiert.

Allerdings ist die Erfindung nicht auf einen Verstellmechanismus beschränkt, bei dem entsprechende Zahnriemen 10 und/oder Doppelzahnscheiben 11 zum Einsatz kommen. Alternativ hierzu ist auch beispielsweise ein Verstellmechanismus mit Kegelrädern denkbar.

Ferner ist es denkbar, dass jedem einzelnen Führungsabschnitt 3 ein eigener Antrieb, insbesondere Linearantrieb zugeordnet ist.

Bei der in den Zeichnungen gezeigten exemplarischen Ausführungsform der erfindungsgemäßen Vorrichtung 1 zum Ein- oder Ausschleusen von Verpackungen in eine Speicherlinie bzw. aus einer Speicherlinie eines Speichertisches handelt es sich insbesondere um einen linearbetriebenen Satelliten oder Umlenker, der quer und vorzugsweise senkrecht zu den Speicherlinien des (nicht gezeigten) Speichertisches bewegbar ist.

Der Satellit bzw. Umlenker weist einen Förderkanal 2 auf, über den Verpackungen zu oder von der Speicherlinie förderbar sind. Dabei ist der Satellit bzw. Umlenker derart insbesondere bedarfsweise adaptierbar ausgebildet, dass zumindest bereichs- oder abschnittsweise eine Breite und/oder Höhe des Förderkanals 2 verstellbar ist.

Im Einzelnen ist bei der in den Zeichnungen gezeigten exemplarischen Ausführungsform vorgesehen, dass der Förderkanal 2 derart gekrümmt ausgeführt ist, dass eine Förder- oder Transportrichtung der Verpackungen bei deren Bewegung durch den Förderkanal 2 umgelenkt wird, vorzugsweise um etwa 90° umgelenkt wird. Hierzu weist die Vorrichtung 1 eine äußere konkave Förderseite 6 und eine innere konvexe Förderseite 7 auf. Zumindest bereichsweise ist zwischen der äußeren konkaven Förderseite und der inneren konvexen Förderseite der Kanal ausgebildet.

Die äußere konkave Förderseite 6 und/oder die innere konvexe Förderseite 7 weist die Vielzahl von im Hinblick auf die Bewegungsrichtung der Verpackungen durch den Förderkanal 2 hindurch radial verstellbare Führungsabschnitte 3 oder Führungssegmente auf.

Dem Förderkanal 2 ist eine Fördereinrichtung mit mindestens einem vorzugsweise umlaufenden Förderband oder mit mindestens einer vorzugsweise umlaufenden Förderkette 4 zugeordnet, wobei das Förderband bzw. die Förderkette 4 zumindest im Wesentlichen vertikal ausgerichtet ist und über die Vielzahl von Führungsabschnitten 3 bzw. Führungssegmenten geführt längs der mindestens einen der beiden einander gegenüberliegend angeordneten Seitenbereiche verläuft.

Dabei ist dem Förderband bzw. der Förderkette 4 ein insbesondere federbelastetes Spannelement 8 zugeordnet, welches ausgebildet ist, bei einer Konturänderung des Förderkanals 2 einen Umfangsausgleich des Förderbands bzw. der Förderkette 4 zu kompensieren.

Die Erfindung ist nicht auf die in den Zeichnungen gezeigte exemplarische Ausführungsform beschränkt, sondern ergibt sich aus einer Zusammenschau sämtlicher hierin offenbarter Merkmale.

### Bezugszeichenliste

- 1: Bestückungsmittel/Entnahmemittel bzw. Vorrichtung zum Ein- oder Ausschleusen von Verpackungen in eine Speicherlinie oder aus einer Speicherlinie eines Speichertisches
- 2: Förderkanal
- 3: Führungsabschnitt
- 4: Förderband/Förderkette
- 6: äußere konkave Förderseite
- 7: innere konvexe Förderseite
- 8: Spannelement
- 9: Handrad/Antrieb
- 10: Zahnriemen
- 11: Doppelzahnscheibe

## Patentansprüche

1. Speichertisch einer Verpackungsanlage, umfassend:
- mindestens eine Einschleusung;
- mindestens eine Ausschleusung; und
- mindestens zwei separat voneinander bestückbare, zwischen der mindestens einen Einschleusung und der mindestens einen Ausschleusung angeordnete Speicherlinien;
**dadurch gekennzeichnet, dass**
die mindestens eine Einschleusung ein Bestückungsmittel (1) mit einem Förderkanal (2) aufweist, wobei das Bestückungsmittel (1) mit dem Förderkanal (2) ausgebildet ist, Verpackungen von einer stromaufwärts des Speichertisches angeordneten Fördereinrichtung aufzunehmen und diese so weiter zu fördern und dabei insbesondere so umzulenken, dass die Verpackungen in einer der mindestens zwei Speicherlinien aufgenommen werden können, wobei das Bestückungsmittel (1) derart insbesondere bedarfsweise adaptierbar ausgebildet ist, dass zumindest bereichs- oder abschnittsweise eine Breite und/oder Höhe des Förderkanals (2) verstellbar ist.

2. Speichertisch nach Anspruch 1,
wobei das Bestückungsmittel (1) der mindestens einen Einschleusung als ein linearbetriebener Satellit ausgeführt ist, welcher quer und vorzugsweise senkrecht zu den mindestens zwei Speicherlinien bewegbar ist.

3. Speichertisch nach Anspruch 1 oder 2,
wobei das Bestückungsmittel (1) der mindestens einen Einschleusung als ein linearbetriebener Umlenker ausgeführt ist, welcher quer und vorzugsweise senkrecht zu den mindestens zwei Speicherlinien bewegbar und ausgebildet ist, ausgehend von der stromaufwärts des Speichertisches angeordneten Fördereinrichtung die Verpackungen entlang ihrer Förder- oder Transportrichtung so umzulenken, dass diese zu einer bestimmten, vorab festgelegten oder festlegbaren Speicherlinie der mindestens zwei Speicherlinien bewegt werden.

4. Speichertisch nach einem der Ansprüche 1 bis 3,
wobei der Förderkanal (2) der mindestens einen Einschleusung zwei einander gegenüberliegend angeordnete und eine Förder- oder Transportrichtung definierende Seitenbereiche aufweist, wobei mindestens einer der beiden einander gegenüberliegend angeordneten Seitenbereiche segmentiert ausgebildet ist und eine Vielzahl von aneinander angrenzenden Führungsabschnitten (3) aufweist, wobei mindestens einer der Führungsabschnitte (3) und vorzugsweise alle Führungsabschnitte (3) bedarfsweise senkrecht zu der von dem Förderkanal (2) vorgegebenen Förder- oder Transportrichtung bewegbar und/oder verstellbar sind zum zumindest bereichs- oder abschnittsweisen Verstellen der Breite des Förderkanals (2).

5. Speichertisch nach Anspruch 4,
wobei den Führungsabschnitten (3) mindestens ein Antrieb (9) zugeordnet ist, welcher insbesondere als manuell betätigbarer oder elektromotorisch betätigbarer Antrieb (9) ausgeführt ist, und welcher ausgebildet ist, bedarfsweise den mindestens einen dem Antrieb (9) zugeordneten Führungsabschnitt (3) senkrecht zu der von dem Förderkanal (2) vorgegebenen Förder- oder Transportrichtung zu bewegen und/oder zu verstellen.

6. Speichertisch nach Anspruch 5,
wobei der Antrieb (9) eine insbesondere mechanisch ausgebildete Synchronisationseinrichtung aufweist, welche ausgebildet ist, eine von dem Antrieb (9) bewirkte Bewegung und/oder Verstellung von einem der Vielzahl von Führungsabschnitten (3) vorzugsweise derart auf die anderen der Vielzahl von Führungsabschnitten (3) zu übertragen, dass auch diese synchron mit dem einen Führungsabschnitt (3) bewegt und/oder verstellt werden.

7. Speichertisch nach einem der Ansprüche 1 bis 6 oder nach dem Oberbegriff von Anspruch 1,
**dadurch gekennzeichnet, dass**
die mindestens eine Ausschleusung ein Entnahmemittel (1) mit einem Förderkanal (2) aufweist, wobei das Entnahmemittel (1) mit dem Förderkanal (2) ausgebildet ist, in einer der mindestens zwei Speicherlinien aufgenommene Verpackungen aufzunehmen und diese so weiter zu fördern und dabei insbesondere so umzulenken, dass die Verpackungen von einer stromabwärts des Speichertisches angeordneten Fördereinrichtung aufgenommen werden können, wobei das Entnahmemittel (1) derart insbesondere bedarfsweise adaptierbar ausgebildet ist, dass zumindest bereichs- oder abschnittsweise eine Breite und/oder Höhe des Förderkanals (2) verstellbar ist.

8. Speichertisch nach Anspruch 7,
wobei das Entnahmemittel (1) der mindestens einen Ausschleusung als ein linearbetriebener Satellit ausgeführt ist, welcher quer und vorzugsweise senkrecht zu den mindestens zwei Speicherlinien bewegbar ist.

9. Speichertisch nach Anspruch 7 oder 8,
wobei das Entnahmemittel (1) der mindestens einen Ausschleusung als ein linearbetriebener Umlenker ausgeführt ist, welcher quer und vorzugsweise senkrecht zu den mindestens zwei Speicherlinien bewegbar und ausgebildet ist, ausgehend von einer der mindestens zwei Speicherlinien zugeordneten Fördereinrichtung die Verpackungen entlang ihrer Förder- oder Transportrichtung so umzulenken, dass diese zu der stromabwärts des Speichertisches angeordneten Fördereinrichtung bewegt werden.

10. Speichertisch nach einem der Ansprüche 7 bis 9,
wobei der Förderkanal (2) der mindestens einen Ausschleusung zwei einander gegenüberliegend angeordnete und eine Förder- oder Transportrichtung definierende Seitenbereiche aufweist, wobei mindestens einer der beiden einander gegenüberliegend angeordneten Seitenbereiche segmentiert ausgebildet ist und eine Vielzahl von aneinander angrenzenden Führungsabschnitte (3) aufweist, wobei mindestens einer der Führungsabschnitte (3) und vorzugsweise alle Führungsabschnitte (3) bedarfsweise senkrecht zu der von dem Förderkanal (2) vorgegebenen Förder- oder Transportrichtung bewegbar und/oder verstellbar sind zum zumindest bereichs- oder abschnittsweisen Verstellen der Breite des Förderkanals (2).

11. Speichertisch nach einem der Ansprüche 1 bis 10,
wobei dem Förderkanal (2) eine Fördereinrichtung mit mindestens einem vorzugsweise umlaufenden Förderband oder mit mindestens einer vorzugsweise umlaufenden Förderkette (4) zugeordnet ist, wobei das Förderband bzw. die Förderkette (4) zumindest im Wesentlichen vertikal ausgerichtet ist und über die Vielzahl von aneinander angrenzenden Führungsabschnitten (3) geführt längs der mindestens einen der beiden einander gegenüberliegend angeordneten Seitenbereiche verläuft.

12. Vorrichtung (1) zum Ein- oder Ausschleusen von Verpackungen in eine Speicherlinie oder aus einer Speicherlinie eines Speichertisches, insbesondere eines Speichertisches nach einem der Ansprüche 1 bis 11, wobei die Vorrichtung (1) einen insbesondere linearbetriebenen Satelliten oder Umlenker aufweist, der quer und vorzugsweise senkrecht zu der Speicherlinie des Speichertisches bewegbar ist, wobei der Satellit bzw. der Umlenker einen Förderkanal (2) aufweist, über den Verpackungen zu oder von der Speicherlinie förderbar sind, wobei der Satellit bzw. Umlenker derart insbesondere bedarfsweise adaptierbar ausgebildet ist, dass zumindest bereichs- oder abschnittsweise eine Breite und/oder Höhe des Förderkanals (2) verstellbar ist.

13. Vorrichtung (1) nach Anspruch 12,
wobei der Förderkanal (2) zwei einander gegenüberliegend angeordnete und eine Förder- oder Transportrichtung definierende Seitenbereiche aufweist, wobei mindestens einer der beiden einander gegenüberliegend angeordneten Seitenbereiche segmentiert ausgebildet ist und eine Vielzahl von aneinander angrenzenden Führungsabschnitten (3) aufweist, wobei mindestens einer der Führungsabschnitte (3) und vorzugsweise alle Führungsabschnitte (3) bedarfsweise senkrecht zu der von dem Förderkanal (2) vorgegebenen Förder- oder Transportrichtung bewegbar und/oder verstellbar sind zum zumindest bereichs- oder abschnittsweisen Verstellen der Breite des Förderkanals (2).

14. Vorrichtung (1) nach Anspruch 13,
wobei dem Förderkanal (2) eine Fördereinrichtung mit mindestens einem vorzugsweise umlaufenden Förderband oder mit mindestens einer vorzugsweise umlaufenden Förderkette (4) zugeordnet ist, wobei das Förderband bzw. die Förderkette (4) zumindest im Wesentlichen vertikal ausgerichtet ist und über die Vielzahl von Führungsabschnitten (3) geführt längs der mindestens einen der beiden einander gegenüberliegend angeordneten Seitenbereiche verläuft, wobei dem Förderband bzw. der Förderkette (4) ein insbesondere federbelastetes Spannelement (8) zugeordnet ist, welches ausgebildet ist, bei einer Korrekturänderung des Förderkanals (2) einen Umfangsausgleich des Förderbands bzw. der Förderkette (4) zu kompensieren.

15. Vorrichtung (1) nach Anspruch 14,
wobei der Förderkanal (2) derart gekrümmt ausgeführt ist, dass eine Förder- oder Transportrichtung der Verpackungen bei deren Bewegung durch den Förderkanal (2) umgelenkt wird, wobei hierzu die Vorrichtung (1) eine äußere konkave Förderseite (6) und eine innere konvexe Förderseite (7) aufweist, wobei zumindest bereichsweise zwischen der äußeren konkaven Förderseite (6) und der inneren konvexen Förderseite (7) der Förderkanal (2) gebildet ist, wobei die äußere konkave Förderseite (6) und/oder die innere konvexe Förderseite (7) die Vielzahl von im Hinblick auf die Bewegungsrichtung der Verpackungen durch den Förderkanal (2) radial verstellbare Führungsabschnitte (3) aufweist.
